# EUROPÄISCHE PATENTSCHRIFT

(11) **EP 0 561 804 B1**
(45) Veröffentlichungstag und Bekanntmachung des Hinweises auf die Patenterteilung: **24.08.1994**
(21) Anmeldenummer: 91919524.8
(22) Anmeldetag: 08.11.1991
(51) Int. Cl.: B60G 15/06, B62D 23/00, B62D 25/08, B62D 27/06

(54) **FEDERBEINAUFNAHME EINER FAHRZEUGKAROSSERIE**
CHASSIS-SIDE SUSPENSION STRUT MOUNTING
LOGEMENT POUR JAMBE DE FORCE D'UNE CARROSSERIE AUTOMOBILE

(30) Priorität: 20.12.1990 DE 4040957
(43) Veröffentlichungstag der Anmeldung: 29.09.1993
(73) Patentinhaber: AUDI AG, 85002 Ingolstadt (DE)
(72) Erfinder: KREIS, Gundolf, D-8072 Oberstimm (DE); TIMM, Heinrich, D-8070 Ingolstadt (DE)
(74) Vertreter: Engelhardt, Harald
(86) Internationale Anmeldenummer: EP9102115
(87) Internationale Veröffentlichungsnummer: WO9211143

(56) Entgegenhaltungen:
- DE-C- 968 706
- US-A- 2 047 336

## Beschreibung

Die Erfindung betrifft eine Federbeinaufnahme einer Fahrzeugkarosserie nach dem Oberbegriff des Anspruchs 1.

Bei der Serienfertigung von Kraftfahrzeugen wird das gesamte Fahrwerk vormontiert und von unten her in die Karosserie eingefügt und verschraubt. Dazu ist es allgemein bekannt, die Federbeine des Fahrwerks an ihrer Oberseite jeweils mit einem Lagerbock auszurüsten, üblicherweise als Gußteil, an dem zum Fahrwerk gehörende Elemente, wie Dämpfer, Federn, Lenker, etc. vormontiert sind. Im Bereich der Federbeinaufnahme an der Karosserie sind Tragteile vorgesehen, die einen karosserieseitigen Federbeintopf halten. Als Tragteile sind Blechkonstruktionen oder Träger möglich. Der karosserieseitige Federbeintopf kann ebenfalls als Gußteil ausgebildet sein. Beim Zusammenbau von Karosserie und Fahrwerk wird der federbeinseitige Lagerbock im karosserieseitigen Federbeintopf zur Anlage gebracht und dort verschraubt. Diese Konstruktion mit Federbeintopf und Lagerbock ist aufwendig und im wesentlichen durch die Vormontagen bestimmt.

Es sind weiter ein federbeinseitiger Lagerbock sowie karosserieseitige Tragteile an einem Fahrzeug mit Gitterrohrrahmen bekannt (US-A-2 047 336, Fig. 9), wobei der Lagerbock zum Vormontieren von Dämpfer und Feder geeignet ist. Dieser Lagerbock wird von einer flachen Aufnahmeplatte aufgenommen, die nicht als Teil des Lagerbocks anzusehen ist, da sie mit den karosserieseitigen Tragteilen fest verbunden ist und deshalb nicht zum Vormontieren von zum Fahrwerk gehörenden Elementen geeignet ist. Somit entspricht diese flache Aufnahmeplatte einem karosserieseitigen Federbeintopf, wobei auch diese Konstruktion aus Lagerbock und flacher, zusätzlicher Aufnahmeplatte aufwendig ist.

Aufgabe der Erfindung ist es, eine Federbeinaufnahme konstruktiv einfacher und kostengünstiger zu gestalten.

Diese Aufgabe wird mit den Merkmalen des Anspruchs 1 gelöst.

Gemäß Anspruch 1 wird vorgeschlagen, die karosserieseitigen Tragteile im Bereich der Federbeinaufnahme direkt als Begrenzung für einen Aufnahmefreiraum für den federbeinseitigen Lagerbock auszubilden und diesen mit den Randbereichen der den Freiraum begrenzenden Tragteilen direkt zu verbinden. Dadurch kann der karosserieseitige Federbeintopf ganz entfallen. Dies bringt keine funktionellen Nachteile, da bei der Ausführung nach dem Stand der Technik zwei Teile, der federbeinseitige Lagerbock und der karosserieseitige Federbeintopf, übereinanderliegen und verschraubt werden, wo funktionsmäßig nur ein Teil notwendig wäre, insbesondere, wenn beide Teile als Gußteile ausgebildet sind.

Trotz Wegfall des karosserieseitigen Federbeintopfs ergibt sich praktisch kein Mehraufwand bei der Montage, da nun der federbeinseitige Lagerbock, anstelle mit dem Federbeintopf, nur direkt mit den Tragteilen zu verschrauben ist.

Grundsätzlich kann der karosserieseitige Federbeintopf bei allen möglichen Konstruktionen von Fahrzeugkarossen, insbesondere auch bei Blechkonstruktionen mit großflächigen, gegebenenfalls verstärkten Blechteilen, im Bereich der Federbeinaufnahme eingespart werden. Nach Anspruch 2 ist die Erfindung aber vorteilhaft dann zu verwenden, wenn an der Federbeinaufnahme zur karosserieseitigen Abstützung Träger verwendet sind. Diese sind dann mit freien Enden aufeinander zugerichtet und bestimmen durch den Freiraum zwischen den freien Enden den Aufnahmebereich für den federbeinseitigen Lagerbock. An den freien Enden liegt dann der Lagerbock an und ist dort mit diesen verschraubt.

Eine Vormontage einer Fahrzeugkarosserie ohne karosserieseitige Federbeintöpfe ist bei Aluminiumkarosserien günstig und zweckmäßig durchführbar, wobei die Träger nach Anspruch 3 Aluminium-Strangprofil-Träger sind und der Lagerbock als Gußteil ausgeführt ist.

Vorteilhaft werden die Enden der Träger schräg zur Federbeinachse ausgeführt, wodurch sich große, stabile Anlageflächen für den Lagerbock ergeben.

Anhand einer Zeichnung wird ein Ausführungsbeispiel der Erfindung mit weiteren Einzelheiten, Merkmalen und Vorteilen näher erläutert.

Es zeigen
- Fig. 1: eine perspektivische Ansicht einer Federbeinaufnahme einer Fahrzeugkarosserie mit einer Trägerkonstruktion, einem strichliert eingezeichneten, karosserieseitigen Federbeintopf nach dem Stand der Technik und dem Oberteil eines Federbeins mit Lagerbock vor dem Zusammenbau,
- Fig. 2: eine Draufsicht einer erfindungsgemäßen Anordnung von Aluminium-Strangprofil-Trägern einer Karosserie, deren Freiraum zwischen freien Trägerenden einen Aufnahmebereich für einen federbeinseitigen Lagerbock bestimmt, und
- Fig. 3: eine Anordnung gemäß Fig. 2, wobei hier das Federbein mit seinem Lagerbock montiert ist.

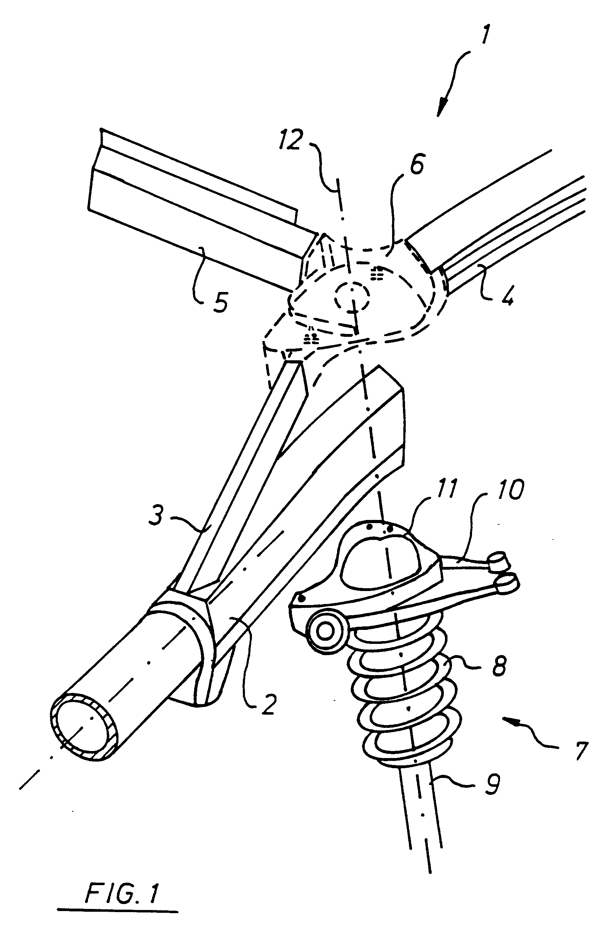

In Fig. 1 ist eine Federbeinaufnahme 1 einer Fahrzeugkarosserie dargestellt. Als Teile der Fahrzeugkarosserie sind ein Teil eines unteren Längsträgers 2, ein Träger 3, der vom Längsträger 2 schräg nach oben zur Federbeinaufnahme 1 weist, ein Träger 4, der vom Bereich der Federbeinaufnahme zum Pfosten A weist und ein Querträger 5 dargestellt. Alle Träger 2, 3, 4, 5 sind Aluminium-Strangpreßprofile.

Die aufeinander zuweisenden Enden der Träger 3, 4, 5 bilden einen Raum, in dem nach dem Stand der Technik ein (in Fig. 1 strichliert eingezeichneter) Federbeintopf 6 angeordnet und befestigt ist.

Unterhalb der den Karosseriebereich darstellenden Trägeranordnung ist der obere Teil eines Federbeins 7 gezeigt, mit einer Feder 8, einem Dämpfer 9 und Lenkern 10. Die Feder 8, der Dämpfer 9 und die Lenker 10 sind an einem oberen Lagerbock 11 befestigt und vormontiert.

Das dargestellte Federbein 7 ist Teil eines Fahrwerks, das insgesamt vormontiert ist und von unten her entlang der Linie 12 in die Fahrzeugkarosserie eingefügt wird. Dabei kommt nach dem Stand der Technik der Lagerbock 11 von unten her am Federbeintopf 6 zur Anlage, wonach beide Teile miteinander verschraubt werden.

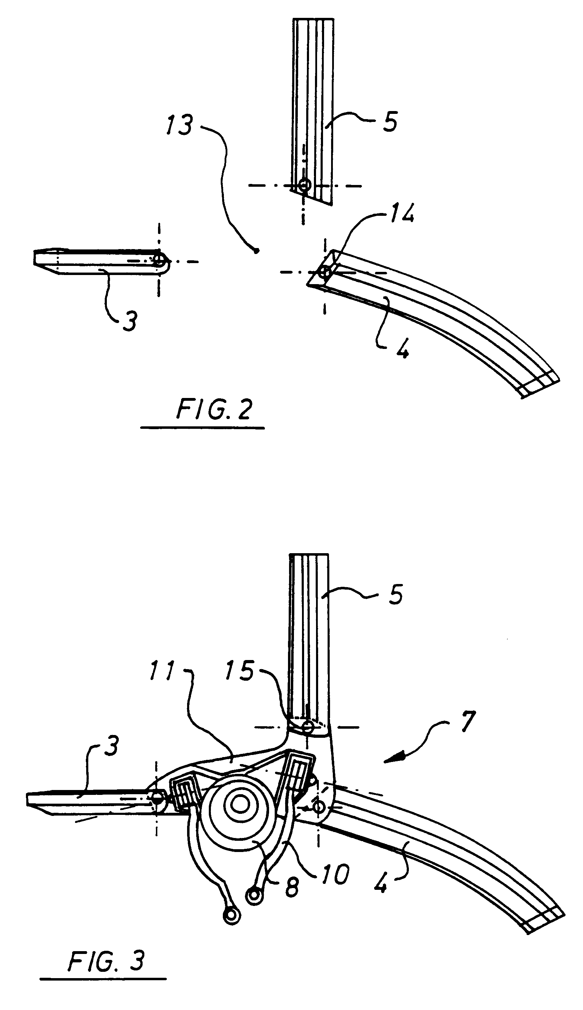

Erfindungsgemäß wird der in Fig. 1 strichliert eingezeichnete Federbeintopf 6 weggelassen, so daß sich in der Draufsicht nach Fig. 3 die Träger 3, 4, 5 so darstellen, daß ihre freien Enden einen Freiraum 13 als Aufnahme für den Lagerbock 11 bilden. An den freien Enden sind jeweils Bohrungen 14 für die Anbringung von Schraubverbindungen eingebracht.

In Fig. 3 ist die Anordnung nach Fig. 2 wieder in der Draufsicht mit bereits montiertem Federbein 7 dargestellt. Es sind wieder der Lagerbock 11, die Feder 8 und die Lenker 10 zu erkennen. Der Lagerbock 11 weist an den Stellen der Bohrungen 14 in den Trägern 3, 4, 5 ebenfalls Bohrungen 15 oder gegebenenfalls Gewindebohrungen auf, wo Verschraubungen angebracht werden können.

Wie aus den Fig. 2 und 3 zu entnehmen ist, sind die Enden der Träger 3, 4, 5 schräg abgeschnitten, wodurch eine große Anlagefläche zum Lagerbock 11 geschaffen wird und durch die damit verbundene keilförmige Auflage Toleranzen gut ausgeglichen werden können.

Bei einer Aluminiumkarosserie mit Trägern 3, 4, 5 als Aluminium-Strangprofile kann die Karosserie besonders einfach und günstig ohne einen karosserieseitigen Federbeintopf 6, d. h. mit freien Trägerenden, hergestellt werden. Bei der Ausführung des Lagerbocks 11 als Gußteil ist eine geeignete feste Abstützung und Steifigkeit ohne den karosserieseitigen Federbeintopf 6 zu erhalten, so daß dieser bei einer solchen Konstruktion bevorzugt entfallen und eingespart werden kann.

## Patentansprüche

1. Federbeinaufnahme einer Fahrzeugkarosserie,
mit einem Federbein (7), das an seiner Oberseite einen federbeinseitigen Lagerbock (11) zum Vormontieren von zum Fahrwerk gehörenden Elementen, wie Dämpfer (9), Feder (8) und Lenker (10) aufweist,
und mit karosserieseitigen Tragteilen im Bereich der Federbeinaufnahme (1),
dadurch gekennzeichnet,
daß die karosserieseitigen Tragteile (3, 4, 5) im Bereich der Federbeinaufnahme (1) direkt als Begrenzung für einen Aufnahmefreiraum (13) ohne karosserieseitigen Federbeintopf (6) für den federbeinseitigen Lagerbock (11) ausgebildet sind und dieser mit den Randbereichen der den Freiraum (13) begrenzenden Tragteile (3, 4, 5) direkt verbunden ist.

2. Federbeinaufnahme nach Anspruch 1, dadurch gekennzeichnet, daß die karosserieseitigen Tragteile wenigstens drei, mit freien Enden aufeinander zugerichtete Träger (3, 4, 5) sind, wobei der Freiraum (13) zwischen den freien Enden den Aufnahmebereich für den federbeinsetigen Lagerbock (11) bestimmt, und
daß an den freien Enden der Träger (3, 4, 5) der Lagerbock (11) anliegt und dort mit diesen verschraubt ist.

3. Federbeinaufnahme nach Anspruch 2, dadurch gekennzeichnet, daß die Träger (3, 4, 5) Aluminium-Strangprofil-Träger sind und der Lagerbock (11) ein Gußteil ist.

4. Federbeinaufnahme nach Anspruch 2 oder 3, dadurch gekennzeichnet, daß die Enden der Träger (3, 4, 5) schräg zur Federbeinachse (12) liegende große Anlageflächen für den Lagerbock (11) aufweisen.

## Claims

1. Spring strut locator for a vehicle bodyshell,
having a spring strut (7) incorporating on its upper face a bearing bracket (11) on the spring-strut side, for pre-assembling elements belonging to the chassis, such as shock absorbers (9), springs (8) and suspension arms (10),
and having supporting parts on the bodyshell side near to the spring strut locator (1),
characterised in that
the supporting parts (3, 4, 5) on the bodyshell side near to the spring strut locator (1) are formed directly as a boundary for a locating space (13) without a spring strut pot (6) on the bodyshell side for the bearing bracket (11) on the spring-strut side and the said bearing bracket (11) is joined directly to the peripheral areas of the supporting parts (3, 4, 5) bounding the space (13).

2. Spring strut locator according to claim 1, characterised in that the supporting parts on the bodyshell side are at least three members (3, 4, 5) with their free ends directed at one another, the space (13) between the free ends defining the locating range for the bearing bracket (11) on the spring-strut side, and
the bearing bracket (11) bears against the free ends of the members (3, 4, 5) and is bolted to the latter thereat.

3. Spring strut locator according to claim 2, characterised in that the members (3, 4, 5) are extruded aluminium profile members and the bearing bracket (11) is a cast part.

4. Spring strut locator according to claim 2 or 3, characterised in that the ends of the members (3, 4, 5) incorporate large contact surfaces for the bearing bracket (11) which are inclined at an angle to the spring strut axis (12).

## Revendications

1. Logement de jambe de force à ressort d'une carrosserie d'automobile,
comprenant une jambe de force à ressort (7) qui présente, à sa partie supérieure, un support (11) du côté jambe pour le pré-montage d'éléments faisant partie du train du véhicule, tels qu'un amortisseur (9), un ressort (8) et un bras oscillant (10),
et des éléments porteurs du côté carrosserie, dans la région du logement (1) de la jambe de force à ressort,
caractérisé en ce que, dans la région du logement (1) de la jambe de force à ressort, les éléments porteurs (3, 4, 5) du côté carrosserie sont réalisés directement sous forme de délimitation pour un espace libre de logement (13), pour le support (11) du côté jambe de force à ressort, sans pot de logement (6) pour la jambe de force à ressort du côté carrosserie, et en ce que celui-ci est raccordé directement aux régions des bords des éléments porteurs (3, 4, 5) qui délimitent l'espace libre (13).

2. Logement de jambe de force à ressort selon la revendication 1, caractérisé en ce que les éléments porteurs du côté carrosserie sont constitués par au moins trois poutrelles (3, 4, 5) dont les extrémités libres sont dirigées les unes vers les autres, de sorte que l'espace libre (13) entre les extrémités libres définisse la région de logement pour le support (11) du côté jambe de force à ressort, et
en ce que le support (11) est appliqué contre les extrémités libres des poutrelles (3, 4, 5) et est boulonné sur celles-ci.

3. Logement de jambe de force à ressort selon la revendication 2, caractérisé en ce que les poutrelles (3, 4, 5) sont des profilés filés en aluminium et le support (11) est une pièce de fonte.

4. Logement de jambe de force à ressort selon la revendication 2 ou 3, caractérisé en ce que les extrémités des poutrelles (3, 4, 5) présentent de grandes surfaces de contact pour le support (11), qui sont obliques par rapport à l'axe (12) de la jambe de force à ressort.
